(19) **Europäisches Patentamt**
**European Patent Office**
**Office européen des brevets**

(11) **EP 2 665 224 B1**

(12) **FASCICULE DE BREVET EUROPEEN**

(45) Date de publication et mention de la délivrance du brevet:
**24.12.2014 Bulletin 2014/52**

(51) Int Cl.:
***H04L 9/08*** *(2006.01)*

(21) Numéro de dépôt: **13167508.4**

(22) Date de dépôt: **13.05.2013**

(54) **Procédé de distribution d'une clef numérique de chiffrement vers des terminaux de télécommunication**

Verfahren zur Verteilung eines digitalen Chiffrierschlüssels an Telekommunikations-Endgeräte

Method of distributing a digital encryption key to telecommunication terminals

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.05.2012 FR 1254466**

(43) Date de publication de la demande:
**20.11.2013 Bulletin 2013/47**

(73) Titulaires:
  • **Airbus DS SAS**
    **78990 Elancourt (FR)**
  • **Cassidian Finland OY**
    **00380 Helsinki (FI)**

(72) Inventeurs:
  • **Prat, Julien**
    **75017 Paris (FR)**
  • **Mouffron, Marc**
    **78470 Saint-Remy-Les-Chevreuse (FR)**
  • **Rinne, Simo**
    **01800 Klaukkala (FI)**
  • **Kauhanen, Lari-Mikko**
    **40520 Jyväskylä (FI)**

(74) Mandataire: **Camus, Olivier Jean-Claude et al**
    **Cabinet Camus Lebkiri**
    **87, rue Taitbout**
    **75009 Paris (FR)**

(56) Documents cités:
  • **RAY I ET AL: "Using compatible keys for secure multicasting in E-commerce", PARALLEL AND DISTRIBUTED PROCESSING SYMPOSIUM., PROCEEDINGS INTERNATIO NAL, IPDPS 2002, ABSTRACTS AND CD-ROM FT. LAUDERDALE, FL, USA 15-19 APRIL 2002, LOS ALAMITOS, CA, USA,IEEE COMPUT. SOC, US, 15 avril 2002 (2002-04-15), pages 225-232, XP010591294, ISBN: 978-0-7695-1573-1**
  • **BAUGHER CISCO R CANETTI IBM L DONDETI QUALCOMM F LINDHOLM ERICSSON M: "Multicast Security (MSEC) Group Key Management Architecture; rfc4046.txt", 20050401, 1 avril 2005 (2005-04-01), XP015041953, ISSN: 0000-0003**

## Description

## DOMAINE

La présente invention se rapporte au domaine technique des communications chiffrées nécessitant une clef de chiffrement pour l'identification de terminaux et de chiffrement des données, de voix et d'adresses.

Plus particulièrement, le domaine de l'invention se rapporte à un procédé de distribution de clef permettant la cohabitation de deux systèmes de cryptographie se basant sur des conceptions de clefs de chiffrement différentes. Le domaine de l'invention se rapporte aux problématiques de migrations de différents architecture de systèmes de communication cohabitant avant un déploiement complet.

## ETAT DE L'ART

Actuellement, il existe pour certains réseaux de communication des solutions pour chiffrer les transmissions de données et/ou de voix. Certains réseaux chiffrés nécessitent le chiffrement des adresses des terminaux pour assurer un maximum de confidentialité.

Typiquement, c'est généralement le cas d'une infrastructure de réseau professionnel de radiocommunication de type PMR.

Les réseaux professionnels de communication PMR (« Professional Mobile Radiocommunications » en anglais) de type TETRA (« Trans European Trunked Radio ») ou TETRAPOL défini par le forum d'industriels TETRAPOL (http://www.tetrapol.com) ou encore de type P25 défini par la « Telecommunications Industry Association (TIA) » pour l' « Association of Public-Safety Communications Officers (APCO)» sont des réseaux indépendants de communication mobile dédiés à l'usage des entreprises ou des administrations, notamment pour assurer la sécurité publique, la sécurité industrielle ou dans les activités de transport. Les réseaux PMR sont largement utilisés par les services de sécurité publique (gendarmerie et police nationale par exemple) et des secours, et également par bien d'autres catégories d'utilisateurs (transports publics, aéroports,...). Ce sont des réseaux privés qui présentent un haut niveau de sécurité.

La structure des réseaux professionnels de communication est normalisée. Ces derniers reposent sur une architecture maillée commune à tout type de réseaux de communication. Les terminaux mobiles se connectent au réseau via des points d'accès sans-fil, appelés stations de base et notées dans la suite de ce document BS.

Les réseaux de communication chiffrés nécessitent une architecture dans laquelle un serveur de gestion de clefs permet de gérer différentes fonctions. Notamment, il réalise différentes fonctions telles que le renouvellement des clefs ou leur acquisition depuis un système tiers. En outre, le serveur de gestion de clefs permet d'assurer la distribution des clefs aux équipements du réseau.

Généralement, des clefs communes et des clefs individuelles sont distribuées permettant la gestion de différentes qualités de services de communication pour les utilisateurs du réseau.

Les clefs communes peuvent être utilisées pour des services de diffusion de données depuis un terminal source ou une station de base. Elles sont généralement utilisées pour des communications de type diffusion vers une pluralité d'utilisateurs telles que des communications de type « cibi chiffrées » dont un utilisateur diffuse de la voix ou des données vers d'autres utilisateurs.

Les clefs communes peuvent être également utilisées dans les communications entre utilisateurs notamment pour le déchiffrement des adresses des terminaux. Les adresses peuvent être aussi bien des adresses individuelles ou des adresses collectives désignant alors un groupe d'au moins deux terminaux.

Les clefs individuelles peuvent être utilisées pour des liaisons point-à-point entre deux terminaux. En outre, elles peuvent être utilisées de manière complémentaire avec des clefs communes lorsque ces dernières chiffrent les adresses des terminaux.

Il est généralement admis que le niveau de sécurité dépend notamment d'une part de la complexité d'une clef et d'autre part de l'algorithme de chiffrement / déchiffrement.

De manière à augmenter les niveaux de sécurité, il est également généralement pratiqué dans de tels réseaux de changer les clefs régulièrement. Selon les architectures réseaux, les clefs peuvent être changées mensuellement, hebdomadairement, quotidiennement ou encore toutes les heures par exemple pour des systèmes à haut degré de confidentialité.

Les clefs sont alors distribuées par le serveur de gestion de clefs. Ces dernières peuvent comprendre des clefs individuelles et des clefs communes. Les clefs communes sont généralement de même type et de même longueur et permettent une homogénéité de fonctionnement au sein de tous les terminaux du réseau et une interopérabilité entre les différents équipements de ce même réseau.

En revanche, il existe une problématique lorsque pour augmenter la sécurité du réseau, on modifie la structure même des clefs communes de chiffrement en augmentant leur taille. Ainsi pour le bon fonctionnement d'un réseau existant, il est nécessaire que tous les équipements disposent des ces nouvelles clefs..

Un inconvénient est qu'il est alors nécessaire de rappeler tous les terminaux pour modifier le matériel ou le logiciel de traitement des nouvelles clefs de chiffrement. Ceci requiert une interruption de service pour chaque utilisateur et peut entrainer un surcoût de maintenance important selon le nombre de terminaux impactés par la migration.

Une autre solution est de maintenir deux types de clefs communes et donc deux ensembles de terminaux fonctionnant ensemble. Un premier ensemble des terminaux déjà déployés fonctionne avec des clefs anciennes de chiffrement (de taille relativement petite). Un deuxième ensemble de terminaux en déploiement fonctionne avec un nouveau type de clef de chiffrement (de taille relativement grande).

Un premier inconvénient et que l'interopérabilité entre les terminaux des deux ensembles n'est pas assurée et que cette gestion de clefs complexifie la maintenance du réseau.

Un second inconvénient est qu'un tiers piratant les terminaux ayant un type de clefs offrant moins de sécurité constitue une menace pour tous les utilisateurs du réseau y compris les utilisateurs de nouveaux terminaux ayant un type de clefs offrant une sécurité supplémentaire.

Un troisième inconvénient est que les communications d'un utilisateur vers une pluralité de terminaux n'est plus possible par l'utilisation d'une unique clef commune qui serait différente selon si les terminaux appartiennent à un ensemble de terminaux déjà déployés et fonctionnant avec des clefs anciennes ou à un ensemble de terminaux en déploiement et fonctionnant avec un nouveau type de clef de chiffrement.

Enfin, un inconvénient majeur est que lorsque la clef commune est utilisée pour le chiffrement d'adresses de terminaux, et que deux types de clefs sont utilisées pour le chiffrement desdites adresses, lorsqu'une communication par exemple entre deux terminaux est instanciée, il n'est plus possible pour un terminal de savoir avec quelles clefs l'adresse d'un autre terminal a été chiffrée.

La conséquence de cette duplication simple de la clef commune pour le groupe de nouveaux terminaux est de ne plus pouvoir discriminer sous une cellule les terminaux par leur adresse chiffrée. En effet, il est alors possible que l'adresse chiffrée d'un premier terminal et celle d'un autre terminal soit égales bien que leurs adresses claires sont différentes.

La gestion du chiffrement des adresses au moyen de deux clefs de chiffrement semble donc constituer une régression importante du point de vue du fonctionnement du réseau et du maintien de sa sécurité et de l'interopérabilité.

I. RAY et al., "Using Compatible Keys for Secure Multicasting in E-Commerce", dans "Proceedings of the International Parallel and Distributed Processing Symposium (IPDPS'02)", expose un procédé de distribution de clés compatibles au sein d'un système d'enregistrement.

M. BAUGHER et al., "Multicast Security (MSEC) Group Key Management Architecture", dans "Request for Comments 4046, Network Working Group" expose des protocoles de gestion de clé au sein d'une architecture supportant Multicast Security (MSEC).

## RESUME DE L'INVENTION

L'invention permet de résoudre les inconvénients précités.

L'objet de l'invention concerne un procédé de distribution de clefs de chiffrement à deux ensembles de terminaux via un réseau de communication depuis un serveur de données. Un premier ensemble de terminaux utilisent un premier type de clef de taille donnée, un second ensemble de terminaux utilisent un second type de clef de taille strictement supérieure à la taille donnée, les clefs de chacun des types étant connues par le serveur à un instant donné, chaque terminal comprenant une adresse d'identification.

En outre, le procédé comprend dans le serveur :

- une réception d'un premier message de données depuis un premier terminal, le premier message comprenant l'adresse du premier terminal ;
- une identification dudit premier terminal par une comparaison de l'adresse du terminal à des adresses des deux ensembles de terminaux pour établir l'appartenance du premier terminal à un des deux ensembles ;
- une sélection d'une première clef du second type de clef ;
- lorsque le premier terminal appartient au premier ensemble, un traitement par le serveur de la première clef par une première fonction pour définir une seconde clef de taille égale à N et compatible avec des clefs du premier type ;
- une transmission au premier terminal de la première clef ou de la seconde clef selon l'appartenance du premier terminal au premier ou au second ensemble.

Le procédé de distribution permet une facilité de distribution qui ne nécessite pas de traitement sur les terminaux déjà en service. Le procédé de l'invention permet un gain en temps en ce qui concerne la maintenance des terminaux du réseau, notamment de ceux déjà déployés.

Un avantage de l'invention est de permettre d'augmenter le degré de sécurité global des communications des terminaux du réseau tout en assurant une interopérabilité entre différentes générations de terminaux opérationnels.

Avantageusement, le procédé de distribution comprend une réception de la clef transmise par le premier terminal.

L'avantage est de permettre un envoi et une réception d'une clef qui sera compatible avec tous les terminaux de chacun des deux ensembles.

Avantageusement, les clefs du premier type de clefs et du second type de clefs sont des clefs communes. L'avantage de cette caractéristique est de faciliter l'émission d'une clef commune à chaque terminal pour chacun des deux ensembles.

En outre, cela permet à tous les terminaux de posséder une clef commune pour au moins le déchiffrement des adresses.

Avantageusement, selon un mode de réalisation, les adresses sont individuelles et définissent un identifiant unique pour chaque terminal. Dans un autre mode, les adresses sont collectives et définissent des identifiants pour des groupes d'au moins deux terminaux.

Avantageusement, le procédé comprend un traitement par le premier terminal, lorsque le premier terminal appartient au second ensemble, de la première clef par une première fonction permettant définir une seconde clef de taille égale à N et compatible avec des clefs du premier type.

Cette caractéristique permet de rendre des clefs communes compatibles entre les terminaux des deux ensembles.

Avantageusement, la première fonction est une fonction dite à sens unique. La première fonction peut être par exemple une fonction de hachage. Cette dernière possibilité permet une implémentation simple de fonctions connues et possédant des caractéristiques intéressantes pour éviter de reconstruire une clef du second type à partir d'une clef du premier type générée par une telle fonction de hachage. Le choix de la première fonction permet un bon compromis entre le niveau de sécurité requis et la facilité d'implémentation d'une telle fonction dans un serveur ou dans un terminal ou encore une station de base.

Avantageusement, le second type de clefs comprend des clefs d'une taille supérieure à 100 bits.

Avantageusement, les échanges de données entre le serveur et au moins un terminal sont réalisés au moyen d'une station de base permettant d'établir la connexion et le routage des données transmises.

Avantageusement, le réseau de communication est un réseau de type PMR, désignant « Professional Mobile Radiocommunications » de type TETRA désignant « Trans European Trunked Radio ».

Un autre objet de l'invention concerne un procédé de chiffrement de données lors d'un transfert de données depuis un terminal, ledit terminal ayant reçu une clef de chiffrement selon le procédé de distribution de l'invention.

Lorsque ledit terminal appartient au second ensemble, le procédé comprend

- un chiffrement d'une adresse dudit terminal à l'aide de la seconde clef par le terminal,
- un chiffrement des données à l'aide d'une troisième clef de chiffrement des données par le terminal,
- une transmission de l'adresse chiffrée et des données chiffrées à une station de base.

Un autre objet de l'invention concerne un procédé de déchiffrement de données lors d'un transfert de données depuis un terminal vers une station de base, le terminal ayant reçu une clef de chiffrement selon le procédé de distribution de l'invention.

Lorsque le terminal appartient au second ensemble, le procédé de déchiffrement comprend :

- un déchiffrement de l'adresse du terminal à l'aide de la seconde clef par la station de base,
- une comparaison de l'adresse déchiffrée aux adresses des deux ensembles de terminaux pour obtenir une clef de chiffrement des données par la station de base,
- un déchiffrement des données à l'aide de la clef de chiffrement des données par la station de base.

L'invention concerne un procédé de chiffrement de données depuis une station de base vers un terminal, ledit terminal ayant reçu une clef de chiffrement selon le procédé de distribution de l'invention.

Lorsque le terminal appartient au second ensemble, le procédé de chiffrement comprend :

- un chiffrement d'une adresse du terminal à l'aide de la seconde clef par la station de base,
- un chiffrement des données à l'aide d'une troisième clef de chiffrement des données par la station de base,
- une transmission de l'adresse chiffrée et des données chiffrées au terminal.

L'invention concerne un procédé de déchiffrement de données par un terminal lors d'un transfert de données depuis une station de base vers ledit terminal, le terminal ayant reçu une clef de chiffrement selon le procédé de distribution de l'invention.

Lorsque le terminal appartient au second ensemble, le procédé de déchiffrement de l'invention comprend :

- un déchiffrement de l'adresse du terminal à l'aide de la seconde clef par le terminal,
- une comparaison de l'adresse déchiffrée aux adresses du terminal pour obtenir la clef de chiffrement des données par le terminal,
- un déchiffrement des données à l'aide de la clef de chiffrement des données par le terminal.

Avantageusement, la troisième clef de chiffrement de données est une première clef commune au premier ensemble de terminaux. Dans une alternative, la troisième clef de chiffrement de données est une clef individuelle de chiffrement du terminal.

En outre un autre objet de l'invention concerne un terminal mobile pour la transmission de données au sein d'un réseau de communication.

Le terminal comprenant une adresse. Au moins un calculateur permet de réaliser :

- une fonction d'instanciation permettant de se déclarer auprès d'un serveur de gestion de clefs de chiffrement ;
- une fonction de réception et de déchiffrement d'une première clef commune de chiffrement reçue après que le terminal se soit déclaré auprès dudit serveur ;

- une fonction d'enregistrement de la première clef commune reçue dans une mémoire;
- une fonction de génération d'une seconde clef dont la taille est strictement inférieure à la taille de la première clef ;
- une première fonction de chiffrement de son adresse (en émission et de déchiffrement d'une adresse en réception à partir de la seconde clef de chiffrement ;
- une seconde fonction de chiffrement des données émises du terminal et de déchiffrement des données reçues à partir d'une troisième clef de chiffrement de données.

Un avantage d'un tel terminal est qu'il est facilement déployable dans un réseau de communication en permettant des fonctions de chiffrement de haut degré de sécurité tout en assurant une interopérabilité avec des terminaux d'une ancienne génération.

Un autre avantage est de pouvoir adapter la troisième clef en fonction du cas d'application, du type de communication ou du type de terminal ou encore du degré de sécurité ou de confidentialité.

Un autre objet de l'invention concerne un serveur de données pour la gestion et la distribution de clefs de chiffrement vers des terminaux d'un réseau de communication. Au moins un calculateur permet de mettre en oeuvre le procédé de distribution de clefs de l'invention.

Enfin, l'invention concerne une station de base pour le transfert de données au sein d'un réseau de communication vers un terminal ayant reçu une clef de chiffrement selon le procédé de distribution de l'invention.

La station de base comprend au moins un calculateur permettant de réaliser :

- une première fonction de chiffrement d'une adresse (ADD) du terminal en émission et de déchiffrement d'une adresse du terminal en réception, à partir de la seconde clef de chiffrement ($CCK_{S2}$);
- une seconde fonction de chiffrement des données émises vers le terminal et de déchiffrement des données reçues du terminal à partir d'une troisième clef de chiffrement de données.

La troisième clef peut être selon la configuration ou le cas d'application : une clef définie en rapport avec le type de communication ou avec le type de terminal ou encore avec le degré de sécurité ou de confidentialité souhaité.

Elle peut être soit une clef commune, soit une clef individuelle.

## BREVES DESCRIPTION DES FIGURES

D'autres caractéristiques et avantages de l'invention ressortiront à la lecture de la description détaillée qui suit, en référence aux figures annexées, qui illustrent :

- figure 1 : une architecture réseau comprenant des terminaux, des stations de base et un serveur de gestion de clefs ;
- figure 2 : une fonction permettant la génération d'une clef de chiffrement conformément à l'invention ;
- figure 3 : un système d'équipement d'un réseau de communication permettant de mettre en oeuvre les procédés de l'invention ;
- la figure 4 : une communication entre un terminal de l'ensemble ayant un type de clef de taille supérieure aux terminaux déjà déployés et une station de base.
- la figure 5 : une communication entre une station de base et un terminal de l'ensemble ayant un type de clef de taille supérieure aux terminaux déjà déployés.

## DESCRIPTION

Dans la suite de la description on appelle une fonction « à sens unique », une fonction qui peut être aisément calculée, mais qui est difficile à inverser. C'est-à-dire qu'étant donnée une image, il est difficile de lui trouver un antécédent. Les fonctions à sens unique sont notamment utilisées en cryptographie asymétrique et dans les fonctions de hachage cryptographiques.

Dans la suite de la description on appelle indifféremment une « clef de chiffrement » et une « clef de chiffrement » une clef permettant de chiffrer des données ou de la voix transmise(s) au travers d'un réseau de communication entre différents terminaux.

On appelle une « clef individuelle », une clef rattachée à un premier terminal qui permet à un équipement tel qu'un serveur ou un autre terminal ou encore une station de base de déchiffrer des communications provenant du premier terminal dès lors que ledit équipement à la connaissance de la clef individuelle.

On appelle clef commune, une même clef transmise à différents terminaux permettant de chiffrer et déchiffrer les communications de voix et de données et à chiffrer et déchiffrer les adresses des terminaux. Le fait que la clef de chiffrement des adresses soit commune à tous les terminaux garantit une correspondance unique entre chaque adresse claire et une adresse chiffrée et réciproquement.

On définit un « type de clef » pour désigner des clefs permettant d'être compatibles avec un algorithme de chiffrement ou de déchiffrement d'adresses, de données ou de voix. Des clefs peuvent être renouvelées dans un système tout en restant compatibles, c'est à dire qu'elles permettent d'être associées à un algorithme invariant.

On dit qu'une clef commune de taille N est compatible avec un premier type de clefs lorsqu'elle est compatible avec l'algorithme de chiffrement ou de déchiffrement associé au premier type de clef.

Un premier type de clef est défini par la notation $CCK_S$ quand il s'agit de clef commune de taille N. Un second type de clef est défini par la notation $CCK_B$ quand il s'agit de clef commune de taille $N_{sup}$.

On peut noter une clef $CCK_{Bi}$ une clef commune du second type de clef par exemple distribuée à l'instant ti et valable pendant une durée Di.

On peut noter une clef $CCK_{Si}$ une clef commune du premier type de clef par exemple distribuée à l'instant ti et valable pendant une durée Di.

Dans la suite de la description, il pourra être noté indifféremment un type de clef $CCK_B$ ou une clef commune $CCK_B$ de ce type par commodité de langage.

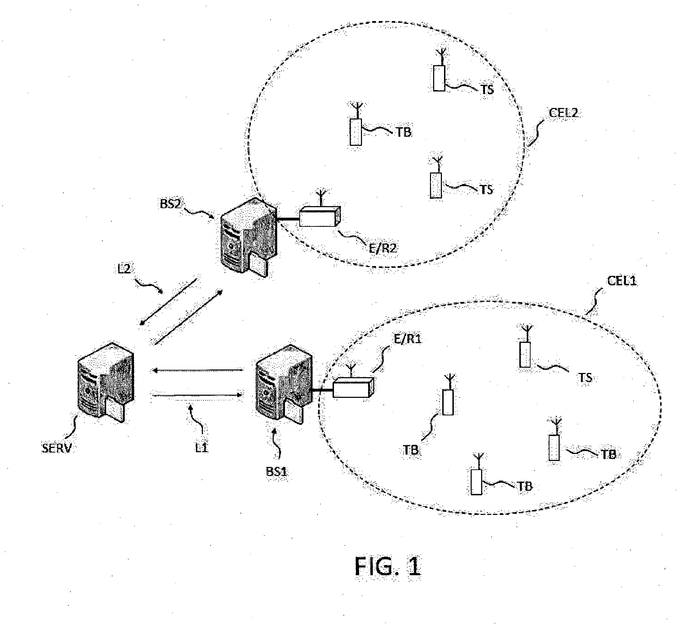

La figure 1 représente un serveur de gestion de clefs, noté SERV, permettant de distribuer les clefs lors d'une phase d'initialisation à au moins un terminal. Le serveur distribue notamment les clefs communes $CCK_B$ et $CCK_S$.

Une architecture réseau possible d'une configuration de l'invention est représentée à la figure 1. Le serveur SERV communique :

- au travers d'une première liaison de données L1 avec une première station de base, notée BS1, définissant une première cellule dans laquelle est déclarée une première pluralité de terminaux TS et TB ;
- au travers d'une seconde liaison de données L2 avec une seconde station de base, notée BS2, définissant une seconde cellule dans laquelle est déclarée une seconde pluralité de terminaux TB, TS.

Chaque station de base, BS1, BS2, comprend un calculateur pouvant être un serveur ou un PC et des moyens d'émission/ réception notés respectivement E/R1 et E/R2. Les moyens d'émission/ réception peuvent être des relais pour la couverture de télécommunications sans fil.

Selon d'autres configurations, il peut exister une seule ou une pluralité de station(s) de base permettant de définir une cellule de communication dans laquelle au moins un terminal est déclaré.

On dit qu'un terminal est déclaré dans la cellule lorsqu'une station de base a référencé sa présence dans une zone de couverture donnée.

L'invention se rapporte à deux types de terminaux. Il y a donc deux ensembles de terminaux comprenant les terminaux de type TB et les terminaux de type TS.

Le premier ensemble, est noté $ENS^B$, comprend les terminaux TB qui sont nouvellement introduits dans le réseau de communication. Ces terminaux disposent de moyens permettant de déchiffrer des données à partir d'une clef commune de chiffrement $CCK_B$ de plus grande taille, notée $N_{sup}$, que les clefs communes de chiffrement TS des terminaux déjà déployés dans le réseau dont la taille est notée N dans la suite de la description.

Le second ensemble, est noté $ENS^S$, comprend les terminaux TS qui sont déjà déployés dans le réseau de communication. Ces terminaux disposent de moyens permettant de déchiffrer des données à partir d'une clef de chiffrement $CCK_S$ de plus petite taille N que les clefs de chiffrement $CCK_B$ des nouveaux terminaux TB de l'ensemble $ENS^B$.

L'invention traite donc d'une problématique de déploiement d'une pluralité de terminaux comprenant de nouvelles fonctionnalités au sein d'un ensemble de terminaux continuant à être exploités. Les deux ensembles de terminaux doivent donc cohabiter et être interopérables.

On a la relation $N < N_{sup}$. Plus la taille de la clef est grande plus le degré de sécurité concernant la confidentialité des échanges numériques est élevé. Il est donc important d'augmenter la sécurité du réseau vis-à-vis d'intrusions de tiers tout en garantissant une interopérabilité maximale entre tous les équipements du réseau.

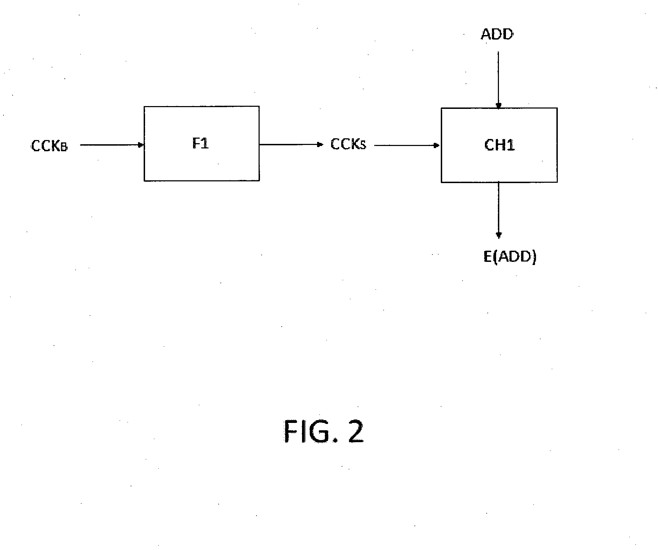

La figure 2 représente une fonction F1 qui peut être réalisée par le serveur SERV conformément à l'invention.

La fonction F1 permet à partir d'une clef commune de chiffrement $CCK_B$ ayant une taille $N_{sup}$ donnée de générer une clef de chiffrement $CCK_S$ de plus petite taille N qui soit compatible avec des algorithmes de chiffrement déjà existants. La fonction F1 est donc construite sur des exigences de compatibilité des clefs générées avec un algorithme existant des terminaux de l'ensemble $ENS^S$.

La fonction F1 est préférentiellement une fonction à sens unique. Dans un mode de réalisation, il s'agit d'une fonction de hachage cryptographique.

Le caractère non inversible de la fonction F1 à sens unique garantit que même si la clef $CCK_S$ est retrouvée par un tiers, celui-ci ne pourrait pas en tirer partie pour retrouver la clef $CCK_B$ dont l'usage est d'améliorer la sécurité des communications qu'elle protège.

La fonction F1 est capable de générer une clef de plus petite taille $F1 (CCK_B) = CCK_S$ compatible avec des anciens terminaux TS et compatible avec des nouveaux terminaux TB pour le déchiffrement des adresses. La fonction F1 est une fonction non inversible.

Un avantage de la fonction F1 est de permettre de conserver un chiffrement et un déchiffrement des adresses des terminaux à partir d'une clef commune de taille unique pour tous les terminaux de chacun des deux ensembles $ENS^B$ et $ENS^S$.

Les clefs de chiffrement sont envoyées lors d'une étape d'initialisation aux terminaux. Elles peuvent comprendre des clefs communes et des clefs individuelles.

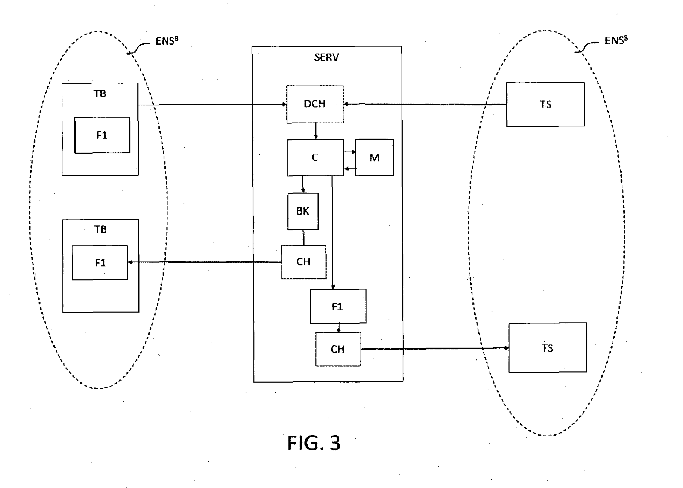

La figure 3 représente un serveur de gestion de clefs et illustre un procédé de distribution des clefs à l'initialisation d'un terminal. On entend par « initialisation d'un terminal », le moment où le terminal se déclare auprès du serveur de gestion des clefs SERV pour obtenir les clefs de chiffrement. Cette opération peut être rééditée à plusieurs reprises et de manière régulière par un ou plusieurs terminal(aux).

Lors de cette étape d'initialisation, un terminal T1 de l'ensemble ENS$^B$ (ou ENS$^S$) se déclare auprès d'un serveur de gestion des clefs à travers le réseau. Le SERV peut également initier la communication à partir d'un procédé préalable de recherche d'un terminal donné, tel qu'un scan d'une adresse.

Le terminal T1 envoie au moins une première trame de données comprenant son adresse via le réseau de communication.

Dans un premier mode, le serveur SERV compare au moyen d'un comparateur C l'adresse reçue du terminal à une liste d'adresses connues et accessibles. La liste des adresses des terminaux du réseau peut être référencée par exemple au moyen d'une mémoire M indiquant si l'adresse d'un terminal est associée à l'ensemble ENS$^B$ ou à l'ensemble ENS$^S$.

Si le terminal appartient à l'ensemble ENS$^B$, le terminal est alors un terminal TB qui vient d'être déployé sur le réseau. Il est alors capable de recevoir des clefs de taille $N_{sup}$ notamment pour chiffrer et déchiffrer des trames d'adresses, de voix et de données. Le serveur SERV, ayant déterminé l'ensemble d'appartenance du terminal TB, procède à l'émission via le réseau d'une clef commune CCK$_B$ d'une taille $N_{sup}$ au terminal TB.

Si le terminal appartient à l'ensemble ENS$^S$, le terminal est alors un terminal TS qui est déjà déployé sur le réseau. Ce terminal n'est pas capable de recevoir des clefs de taille $N_{sup}$ notamment pour chiffrer et déchiffrer des trames d'adresses, de voix et de données. Le terminal TS ne peut que gérer des clefs de taille plus petite de taille N. Le serveur SERV, ayant déterminé l'ensemble d'appartenance du terminal TS au moyen du comparateur C, procède à un traitement d'une clef commune CCK$_B$ de taille $N_{sup}$ par la fonction F1 permettant de formater la clef pour qu'elle soit compatible avec le chiffrement et déchiffrement par les terminaux de l'ensemble ENS$^S$.

La fonction F1 génère donc une clef CCK$_S$ de taille N compatible avec des algorithmes des terminaux de l'ensemble ENS$^S$ et procède à son émission via le réseau vers le terminal TS.

Une alternative de réalisation peut comprendre, dans l'initialisation d'un terminal, un chiffrement des données entre un terminal et le serveur. Notamment, cette alternative permet de transmettre des adresses chiffrées, des clefs chiffrées et des données chiffrées. Il s'agit dans ce cas d'une clef individuelle de type DCK et non une clef commune de type CCK.

La figure 3 représente une fonction de déchiffrement DCH des données reçues par le serveur au moyen d'une clef individuelle et une fonction de chiffrement CH de données comprenant au moins une clef envoyée au terminal. L'étape de chiffrement peut être réalisée suite au traitement de clef commune CCK$_B$ par la fonction F1 pour générer une clef CCK$_S$ ou directement à partir d'une clef commune CCK$_B$ de taille $N_{sup}$.

Lors d'une communication par exemple entre au moins deux terminaux, ces derniers chiffrent leur adresse lors de la transmission de données.

Les adresses sont :

- soit chiffrées directement à partir d'une clef de chiffrement commune CCK$_S$ d'un terminal de l'ensemble ENS$^S$,
- soit sont chiffrées à partir d'une clef générée par la fonction F1 d'un terminal TB de l'ensemble ENS$^B$, notée CCK$_S$ également.

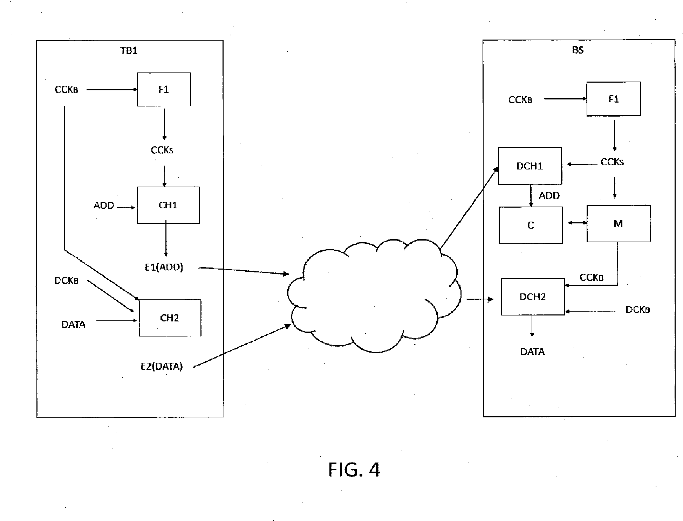

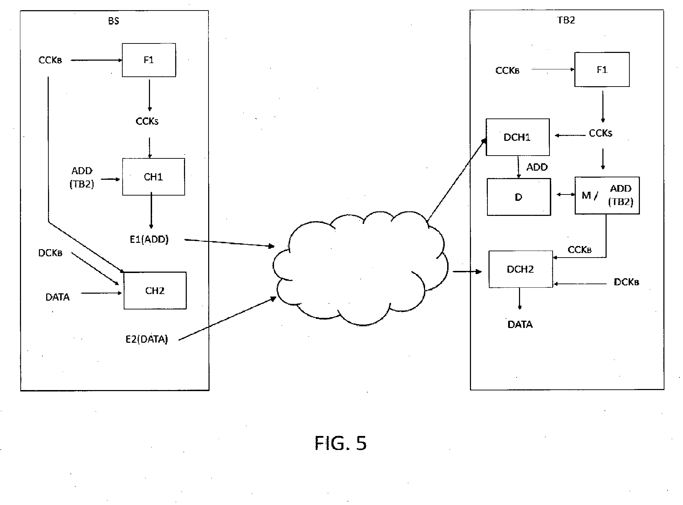

La figure 2 illustre ce dernier cas de figure dans lequel la clef commune CCK$_S$ générée permet de chiffrer une adresse ADD par un algorithme de chiffrement CH1 pour générer une adresse chiffrée E(ADD), également notée dans les figures 4 et 5 : E1 (ADD).

Un avantage est qu'il n'est pas nécessaire d'apporter de modifications aux terminaux de l'ensemble ENS$^S$ qui reçoivent une clef CCK$_S$ déjà formatée pour les algorithmes implémentés dans les terminaux de l'ensemble ENS$^S$. Il n'est donc pas nécessaire de mettre à jour les terminaux déjà déployés de l'ensemble ENS$^S$, ni de réaliser de modifications ou d'actions de rétrofit.

Lorsqu'une adresse est déchiffrée avec une clef commune CCK$_S$, un terminal ou un serveur de données ou une station de base peut entreprendre de déchiffrer les données d'une communication avec une clef appropriée selon l'adresse déchiffrée.

Un terminal peut comprendre donc plusieurs clefs de chiffrement. Un exemple de réalisation est par exemple que lors de la phase d'initialisation, le terminal peut recevoir dans la même phase ou dans des phases successives différentes clefs de chiffrement.

Une clef principale K, une première clef individuelle DCK et une première clef commune CCK peuvent être transmises à au moins un terminal d'une cellule via la station de base SB. Les clefs peuvent être également envoyées simultanément à une pluralité de terminaux d'une même cellule.

La clef principale K ou la première clef individuelle DCK peut être utilisée pour transmettre de façon sécurisée d'autres clefs individuelles ou communes. C'est notamment le cas de l'exemple représenté à la figure 3 où les fonctions de chiffrement CH et de déchiffrement DCH de la clef commune CCK$_S$ et CCK$_B$ sont réalisées après réception des données d'un terminal et avant l'émission de données vers un terminal. Les fonctions de chiffrement CH et de déchiffrement DCH sont réalisées au moyen d'une clef individuelle DCK$_S$ ou DCK$_B$ selon l'appartenance du terminal aux ensemble ENS$^S$ et ENS$^B$.

Le procédé de distribution de clefs de l'invention permet de n'utiliser pour le chiffrement des adresses qu'une seule clef commune CCK$_S$ à tous les terminaux quelque soit leur appartenance à l'ensemble ENS$^S$ ou ENS$^B$.

Cela permet de conserver une phase de distribution de clef rigoureusement identique pour les terminaux déjà déployés afin de ne pas charger l'air interface par des échanges supplémentaires.

Et cela permet d'envoyer des clefs communes nouvelles CCK[B] aux nouveaux terminaux qui sont eux capables de générer une clef commune CCKS étant donné que la fonction F1 est présente dans les terminaux TB de l'ensemble ENS[B].

Pour cela la clef de chiffrement des adresses devient :

$$CCK_S = F1(CCK_B).$$

Ce calcul est fait dans le serveur SERV de gestion des clefs et dans les terminaux TB de l'ensemble ENS[B] qui reçoivent la clef $CCK_B$. Les terminaux TS appartenant à l'ensemble $ENS_S$ continuent de recevoir une clef $CCK_S$ au format qui est connue de ces terminaux.

La figure 4 illustre une configuration d'un échange depuis un terminal TB1 de l'ensemble ENS[B] ayant une clef commune de taille $N_{sup}$ vers une station de base BS.

La configuration est la suivante : le terminal TB1 tente d'établir une communication chiffrée selon le procédé de chiffrement de l'invention avec la station de base. La station de base déchiffre les trames reçues conformément au procédé de déchiffrement de l'invention via le réseau.

Dans cette configuration on fait l'hypothèse que la clef commune permet de chiffrer les adresses des terminaux et les données des communications.

Le terminal TB1 qui possède une clef commune $CCK_B$ de taille $N_{sup}$ peut générer une clef commune $CCK_S$ de taille N au moyen de la fonction F1 qui est implémentée dans chaque terminal TB de l'ensemble ENS[B]. La clef commune $CCK_S$ ainsi générée permet de chiffrer l'adresse ADD du terminal TB1 au moyen d'un algorithme de chiffrement CH1 utilisant la clef commune $CCK_S$ de taille N. L'adresse chiffrée est notée E1(ADD). L'adresse chiffrée est envoyée à la station de base BS.

Les données DATA sont chiffrées de préférence avec la clef individuelle $DCK_B$ au moyen d'un algorithme de chiffrement CH2 pour obtenir les données chiffrées E2(DATA). En variante, les données DATA peuvent être chiffrées avec la clef commune $CCK_B$.

Les trames de données chiffrées E2(DATA) peuvent être envoyées simultanément ou successivement aux trames comprenant l'adresse chiffrée E1 (ADD).

La station de base BS reçoit la trame comprenant l'adresse chiffrée E1(ADD) et déchiffre au moyen d'un algorithme de déchiffrement DCH1 utilisant une clef $CCK_S$ préalablement obtenue pour obtenir une adresse déchiffrée ADD.

Lorsque l'adresse ADD du terminal TB1 est déchiffrée, une fonction C permet de comparer si l'adresse déchiffrée correspond à une adresse individuelle ou collective du terminal TB1 pour déterminer la clef de déchiffrement des données E2(DATA). Ces adresses sont mémorisées dans une mémoire M de la station de base, chaque adresse étant associée à une clef de déchiffrement individuelle ou commune. Si l'adresse ADD est individuelle la clef sera une clef individuelle $DCK_B$ d'un terminal de l'ensemble ENS[B] ou une clef individuelle $DCK_S$ d'un terminal de l'ensemble ENS[S]. Si l'adresse ADD est collective la clef sera une clef commune $CCK_B$ aux terminaux de l'ensemble ENS[B] ou une clef commune $CCK_S$ aux terminaux de l'ensemble ENS[S].

Si la comparaison est positive, la station de base BS peut utiliser la clef $CCK_B$ ou $DCK_B$ associée au terminal TB1 pour déchiffrer au moyen d'un algorithme de déchiffrement DCH2 les trames de données DATA.

Si la comparaison n'est pas positive, la station de base BS ne traite pas les données.

La figure 5 illustre une configuration d'un échange depuis une station de base BS vers au moins un terminal TB2 de l'ensemble ENS[B] ayant une clef commune de taille $N_{sup}$.

La configuration est la suivante : la station de base BS tente d'établir une communication chiffrée selon le procédé de chiffrement de l'invention avec le terminal TB2 qui est inscrit sous la cellule de cette station de base. Le terminal TB2 déchiffre les trames reçues conformément au procédé de déchiffrement de l'invention.

Dans cette configuration on fait l'hypothèse que la clef commune permet de chiffrer les adresses des terminaux et les données DATA des communications.

La station de base BS qui possède une clef commune $CCK_B$ de taille $N_{sup}$ peut générer une clef commune $CCK_S$ de taille N au moyen de la fonction F1 qui est implémentée dans la station de base BS. Dans une variante de réalisation, la station de base BS peut recevoir du serveur directement la clef commune $CCK_S$ de taille N. La clef commune $CCK_S$ ainsi obtenue permet de chiffrer l'adresse ADD (individuelle ou collective) du terminal TB2 au moyen d'un algorithme de chiffrement CH1 utilisant la clef commune $CCK_S$ de taille N. L'adresse chiffrée est notée E1(ADD). L'adresse chiffrée est envoyée au terminal destinataire TB2.

La station de base chiffre les trames DATA par application de la clef $CCK_B$ à un algorithme de chiffrement CH2 pour obtenir les trames chiffrées E2(DATA). Les trames de données E2(DATA) peuvent être envoyées simultanément ou successivement aux trames E1 (ADD).

Le terminal TB2 reçoit la trame comprenant l'adresse chiffrée E1(ADD) et déchiffre au moyen d'un algorithme de déchiffrement DCH1 utilisant une clef $CCK_S$ qui a été préalablement générée par une fonction F1 du terminal TB2 à partir d'une clef $CCK_B$.

Lorsque l'adresse ADD du terminal TB2 est déchiffrée, une fonction D permet de comparer si l'adresse déchiffrée correspond à une adresse individuelle ou collective du terminal TB2 pour déterminer la clef de déchiffrement des données E2(DATA). Ces adresses sont mémorisées dans une mémoire M du terminal TB2, chaque adresse étant associée à une clef de déchiffrement individuelle ou commune. Si l'adresse ADD est individuelle la clef est une clef individuelle $DCK_B$. Si l'adresse ADD est collective la clef est une clef commune $CCK_B$.

Si la comparaison est positive, le terminal TB2, peut utiliser la clef $CCK_B$ ou $DCK_B$ pour déchiffrer au moyen d'un algorithme de déchiffrement DCH2 les trames de données DATA.

Si la comparaison n'est pas positive, le terminal TB2 ne traite pas les données.

Il est possible dans une alternative de réalisation de l'invention que les fonctions de déchiffrement DCH1 de l'adresse ADD et de comparaison C soient supportées également par les terminaux TB1 et TB2 lors d'une communication directe entre les terminaux ou d'une communication de bout en bout, c'est-à-dire sans traitement intermédiaire entre ces terminaux.

Dans ce dernier cas chaque terminal comprend la liste des adresses des autres terminaux et éventuellement leur appartenance aux deux ensembles $ENS^S$ et $ENS^B$.

Dans ce dernier cas, la fonction de comparaison C permettant de comparer une adresse d'un terminal donné avec les adresses de deux ensembles de terminaux pour déterminer l'appartenance des terminaux aux deux ensembles, est réalisée directement par un terminal.

L'invention permet donc d'augmenter le niveau de sécurité et de confidentialité des terminaux de l'ensemble $ENS^B$ tout en assurant une compatibilité avec les terminaux de l'ensemble $ENS^S$ nécessitant des clefs de plus petite taille.

**Revendications**

1. Procédé de distribution de clefs de chiffrement à deux ensembles ($ENS^B$, $ENS^S$) de terminaux (TBi, TSi) via un réseaux de communication depuis un serveur de données (SERV), un premier ensemble ($ENS^S$) de terminaux (TSi) utilisant un premier type de clef ($CCK_S$) de taille donnée (N), un second ensemble ($ENS^B$) de terminaux (TBi) utilisant un second type de clef ($CCK_B$) de taille strictement supérieure à la taille donnée (Nsup), les clefs de chacun des types étant connues par le serveur (SERV) à un instant donné, chaque terminal (TBi, TSi) comprenant une adresse d'identification (ADDi), le procédé comprenant dans le serveur :

   • une réception d'un premier message de données depuis un premier terminal, le premier message comprenant l'adresse du premier terminal ;
   • une identification dudit premier terminal (T1) par une comparaison de l'adresse (ADDi) du terminal (T1) à des adresses des deux ensembles de terminaux pour établir l'appartenance du premier terminal à un des deux ensembles ;

   • une sélection d'une première clef du second type de clef ($CCK_B$) ;
   • lorsque le premier terminal (T1) appartient au premier ensemble ($ENS_S$), un traitement par le serveur (SERV) de la première clef ($CCK_{B1}$) par une première fonction (F1) pour définir une seconde clef ($CCK_{S2}$) de taille égale à N et compatible avec des clefs du premier type ($CCK_S$) ;
   • une transmission au premier terminal (T1) de la première clef ($CCK_{B1}$) ou de la seconde clef ($CCK_{S2}$) selon l'appartenance du premier terminal au premier ou au second ensemble.

2. Procédé de distribution de clefs de chiffrement selon la revendication 1, **caractérisé en ce qu'il** comprend une réception de la clef transmise par le premier terminal (T1).

3. Procédé de distribution de clefs de chiffrement selon l'une quelconque des revendications 1 à 2, **caractérisé en ce que** les clefs du premier type de clefs et du second type de clefs sont des clefs communes à tous les terminaux.

4. Procédé de distribution de clefs de chiffrement selon l'une quelconque des revendications 1 à 3, **caractérisé en ce que** les adresses sont individuelles définissant un identifiant unique pour chaque terminal.

5. Procédé de distribution de clefs de chiffrement selon l'une quelconque des revendications 1 à 3, **caractérisé en ce que** les adresses sont collectives définissant des identifiants pour des groupes d'au moins deux terminaux.

6. Procédé de distribution de clefs de chiffrement selon l'une quelconque des revendications 1 à 5, **caractérisé en ce que** le procédé comprend un traitement par le premier terminal (T1), lorsque le premier terminal (T1) appartient au second ensemble ($ENS^B$), de la première clef ($CCK_{B1}$) par une première fonction (F1) permettant définir une seconde clef ($CCK_{S2}$) de taille égale à N et compatible avec des clefs du premier type (CCKs).

7. Procédé de distribution de clefs de chiffrement selon l'une quelconque des revendications 1 à 6, **caractérisé en ce que** la première fonction (F1) est une fonction dite à sens unique.

8. Procédé de distribution de clefs de chiffrement selon l'une quelconque des revendications 1 à 7, **caractérisé en ce que** la première fonction (F1) est une fonction de hachage.

9. Procédé de distribution de clefs de chiffrement selon l'une quelconque des revendications 1 à 8, **caractérisé en ce que** le second type de clefs ($CCK_{B1}$)

comprend des clefs d'une taille supérieure à 100 bits.

**10.** Procédé de distribution de clefs de chiffrement selon l'une quelconque des revendications 1 à 9, **caractérisé en ce que** les échanges de données entre le serveur (SERV) et au moins un terminal sont réalisés au moyen d'une station de base permettant d'établir la connexion et le routage des données transmises.

**11.** Procédé de distribution de clefs de chiffrement selon l'une quelconque des revendications 1 à 10, **caractérisé en ce que** le réseau de communication est un réseau de type PMR, désignant « Professional Mobile Radiocommunications » de type TETRA désignant « Trans European Trunked Radio ».

**12.** Procédé de chiffrement de données lors d'un transfert de données depuis un terminal (TB1) comprenant les étapes du procédé de distribution de l'une quelconque des revendications 1 à 11, **caractérisé en ce qu'**il comprend lorsque le terminal (TB1) appartient au second ensemble (ENS$^B$),

· un chiffrement d'une adresse (ADD) du terminal (TB1) à l'aide de la seconde clef (CCK$_{S2}$) par le terminal,
· un chiffrement des données (DATA) à l'aide d'une troisième clef (CCK$_B$, DCK$_B$) de chiffrement des données par le terminal,
· une transmission de l'adresse chiffrée (E1(ADD)) et des données chiffrées (E2(DATA)) à une station de base (BS).

**13.** Procédé de déchiffrement de données lors d'un transfert de données depuis un terminal (TB1) vers une station de base (BS), comprenant les étapes du procédé de distribution de l'une quelconque des revendications 1 à 11, **caractérisé en ce qu'**il comprend, lorsque le terminal (TB1) appartient au second ensemble (ENS$^B$) :

· un déchiffrement de l'adresse (ADD) du terminal (TB1) à l'aide de la seconde clef (CCK$_{S2}$) par la station de base (BS),
· une comparaison (C) de l'adresse (ADD) déchiffrée aux adresses des deux ensembles de terminaux pour obtenir une clef de chiffrement des données par la station de base (BS),
· un déchiffrement des données à l'aide de la clef de chiffrement des données par la station de base (BS).

**14.** Procédé de chiffrement de données depuis une station de base (BS) vers un terminal (TB2), comprenant les étapes du procédé de distribution de l'une quelconque des revendications 1 à 11, **caractérisé en ce qu'**il comprend, lorsque le terminal (TB2) appartient au second ensemble (ENS$^B$), :

· un chiffrement d'une adresse (ADD) du terminal (TB2) à l'aide de la seconde clef (CCK$_{S2}$) par la station de base (BS),
· un chiffrement des données (DATA) à l'aide d'une troisième clef de chiffrement des données par la station de base,
· une transmission de l'adresse chiffrée (E1(ADD)) et des données chiffrées (E2(DATA)) au terminal (TB2).

**15.** Procédé de déchiffrement de données par un terminal (TB2) lors d'un transfert de données depuis une station de base (BS) vers ledit terminal (TB2), comprenant les étapes du procédé de distribution de l'une quelconque des revendications 1 à 11, **caractérisé en ce qu'**il comprend lorsque le terminal (TB2) appartient au second ensemble (ENS$^B$),

· un déchiffrement de l'adresse (ADD) du terminal (TB2) à l'aide de la seconde clef (CCK$_{S2}$) par le terminal,
· une comparaison (D) de l'adresse déchiffrée aux adresses du terminal pour obtenir la clef de chiffrement des données par le terminal,
· un déchiffrement des données à l'aide de la clef de chiffrement des données par le terminal.

**16.** Procédé de chiffrement et de déchiffrement selon l'une des revendications 12 à 15, **caractérisé en ce que** la troisième clef de chiffrement de données est une première clef commune (CCK$_B$) au premier ensemble de terminaux.

**17.** Procédé de chiffrement et de déchiffrement selon l'une des revendications 12 à 15, **caractérisé en ce que** la troisième clef de chiffrement de données est une clef individuelle de chiffrement (DCK$_B$) du terminal.

**18.** Terminal mobile pour la transmission de données au sein d'un réseau de communication, le terminal comprenant une adresse, **caractérisé en ce qu'il** comprend au moins un calculateur permettant de réaliser :

· une fonction d'instanciation permettant de se déclarer auprès d'un serveur de gestion de clefs de chiffrement (SERV) ;
· une fonction de réception et de déchiffrement d'une première clef commune (CCK$_{B1}$) de chiffrement reçue après que le terminal se soit déclaré auprès dudit serveur (SERV) ;
· une fonction d'enregistrement de la première clef commune (CCK$_{B1}$) reçue dans une mémoire (M) ;
· une fonction de génération d'une seconde clef (CCK$_{S2}$) dont la taille est strictement inférieure à la taille de la première clef (CCK$_{B1}$) ;

• une première fonction de chiffrement de son adresse (ADD) en émission et de déchiffrement d'une adresse en réception à partir de la seconde clef de chiffrement ($CCK_{S2}$) ;

• une seconde fonction de chiffrement des données émises du terminal et de déchiffrement des données reçues à partir d'une troisième clef ($CCK_B$, $DCK_B$) de chiffrement de données.

19. Serveur de données pour la gestion et la distribution de clefs de chiffrement vers des terminaux d'un réseau de communication, **caractérisé en ce qu'il** comprend au moins un calculateur permettant de mettre en oeuvre le procédé de distribution de l'une quelconque des revendications 1 à 11.

20. Système comprenant un serveur adapté à exécuter le procédé de distribution de l'une quelconque des revendications 1 à 11, et une station de base pour le transfert de données au sein d'un réseau de communication vers un terminal ayant reçu une clef de chiffrement selon le procédé de distribution de l'une quelconque des revendications 1 à 11, **caractérisé en ce qu'**elle comprend au moins un calculateur permettant de réaliser :

• une première fonction de chiffrement d'une adresse (ADD) du terminal en émission et de déchiffrement d'une adresse du terminal en réception, à partir de la seconde clef de chiffrement ($CCK_{S2}$);

• une seconde fonction de chiffrement des données émises vers le terminal et de déchiffrement des données reçues du terminal à partir d'une troisième clef ($CCK_B$, $DCK_B$) de chiffrement de données.

**Patentansprüche**

1. Ausgabeverfahren von Verschlüsselungsschlüsseln an zwei Gruppen ($ENS^B$, $ENS^S$) von Terminals (TBi, TSi) über ein Kommunikationsnetz von einem Datenserver (SERV), eine erste Gruppe ($ENS^S$) von Terminals (TSi), die einen ersten Schlüsseltyp ($CCK_S$) in vorbestimmter Größe (N) verwenden, eine zweite Gruppe ($ENS^B$) von Terminals (TBi), die einen zweiten Schlüsseltyp ($CCK_B$) in strikt größerer Größe als die vorbestimmte Größe (Nsup) verwenden, wobei die Schlüssel jedes der Typen dem Server (SERV) zu einem vorbestimmten Moment bekannt sind, wobei jedes Terminal (TBi, TSi) eine Identifikationsadresse (ADDi) umfasst, wobei das Verfahren in einem Server umfasst:

* einen Empfang einer ersten Datennachricht von einem ersten Terminal aus, wobei die erste Nachricht die Adresse des ersten Terminals umfasst;

* eine Identifizierung des genannten ersten Terminals (T1) durch einen Vergleich der Adresse (ADDi) des Terminals (T1) mit den Adressen der zwei Gruppen von Terminals zur Feststellung der Zugehörigkeit des ersten Terminals zu einer der zwei Gruppen;

* eine Auswahl eines ersten Schlüssels des zweiten Schlüsseltyps ($CCK_B$);

* wenn das erste Terminal (T1) zur ersten Gruppe ($ENS_S$) gehört, eine Verarbeitung durch den Server (SERV) des ersten Schlüssels ($CCK_{B1}$) durch eine erste Funktion (F1), um einen zweiten Schlüssel ($CCK_{S2}$) in der gleichen Größe wie N und kompatibel mit den Schlüsseln des zweiten Typs ($CCK_S$) zu definieren;

* eine Übertragung des ersten Schlüssels ($CCK_{B1}$) oder des zweiten Schlüssels ($CCK_{S2}$) gemäß der Zugehörigkeit des ersten Terminals zur ersten oder zur zweiten Gruppe auf das erste Terminal (T1).

2. Ausgabeverfahren von Verschlüsselungsschlüsseln gemäß Anspruch 1, **dadurch gekennzeichnet, dass** es einen Empfang des vom ersten Terminal (T1) übertragenen Schlüssels umfasst.

3. Ausgabeverfahren von Verschlüsselungsschlüsseln gemäß Anspruch 1 bis 2, **dadurch gekennzeichnet, dass** die Schlüssel des ersten Schlüsseltyps und des zweiten Schlüsseltyps allen Terminals gemeinsame Schlüssel sind.

4. Ausgabeverfahren von Verschlüsselungsschlüsseln gemäß Anspruch 1 bis 3, **dadurch gekennzeichnet, dass** die individuellen Adressen eine einzigartige Kennung für jedes Terminal definieren.

5. Ausgabeverfahren von Verschlüsselungsschlüsseln gemäß Anspruch 1 bis 3, **dadurch gekennzeichnet, dass** die Adressen kollektiv sind und die Kennungen für Gruppen von mindestens zwei Terminals definieren.

6. Ausgabeverfahren von Verschlüsselungsschlüsseln gemäß Anspruch 1 bis 5, **dadurch gekennzeichnet, dass** das Verfahren, wenn das erste Terminal (T1) zur zweiten Gruppe ($ENS^B$) gehört, eine Verarbeitung des ersten Schlüssels ($CCK_{B1}$) durch das erste Terminal (T1) durch eine erste Funktion (F1) umfasst, die die Definition eines zweiten Schlüssels ($CCK_{S2}$) gleicher Größe wie N und kompatibel mit den Schlüsseln vom ersten Typ ($CCK_S$) erlaubt.

7. Ausgabeverfahren von Verschlüsselungsschlüsseln gemäß Anspruch 1 bis 6, **dadurch gekennzeichnet, dass** die erste Funktion (F1) eine so genannte Einbahnfunktion ist.

8. Ausgabeverfahren von Verschlüsselungsschlüsseln gemäß Anspruch 1 bis 7, **dadurch gekennzeichnet, dass** die erste Funktion (F1) eine Zerhackerfunktion ist.

9. Ausgabeverfahren von Verschlüsselungsschlüsseln gemäß Anspruch 1 bis 8, **dadurch gekennzeichnet, dass** der zweite Schlüsseltyp (CCK$_{B1}$) Schlüssel in einer größeren Größe als 100 Bit umfasst.

10. Ausgabeverfahren von Verschlüsselungsschlüsseln gemäß Anspruch 1 bis 9, **dadurch gekennzeichnet, dass** der Datenaustausch zwischen dem Server (SERV) und wenigstens einem Terminal mittels einer Basisstation realisiert wird, die die Herstellung der Verbindung und das Routen der übertragenen Daten zulässt.

11. Ausgabeverfahren von Verschlüsselungsschlüsseln gemäß Anspruch 1 bis 10, **dadurch gekennzeichnet, dass** das Kommunikationsnetz ein Netz vom Typ PMR ist, was für "Professional Mobile Radiocommunications" vom Typ TETRA steht, was für "Trans European Trunked Radio" steht.

12. Datenverschlüsselungsverfahren bei einer Datenübertragung von einem Terminal (TB1), umfassend die Stufen des Ausgabeverfahrens gemäß Anspruch 1 bis 11, **dadurch gekennzeichnet, dass** es, wenn das Terminal (TB1) zur zweiten Gruppe (ENS$^B$) gehört, umfasst:

    * eine Verschlüsselung einer Adresse (ADD) des Terminals (TB1) mithilfe des zweiten Schlüssels (CCK$_{S2}$) durch das Terminal
    * eine Verschlüsselung der Daten (DATA) mithilfe eines dritten Verschlüsselungsschlüssel (CCK$_B$, DCK$_B$) der Daten durch das Terminal,
    * eine Übertragung der verschlüsselten Adresse (E1(ADD)) und der verschlüsselten Daten (E2(DATA) auf eine Basisstation (BS).

13. Datenverschlüsselungsverfahren bei einer Datenübertragung von einem Terminal (TB1) zu einer Basisstation (BS), umfassend die Stufen des Ausgabeverfahrens gemäß Anspruch 1 bis 11, **dadurch gekennzeichnet, dass** es, wenn das Terminal (TB1) zur zweiten Gruppe (ENS$^B$) gehört, umfasst:

    * eine Entschlüsselung der Adresse (ADD) des Terminals (TB1) mithilfe des zweiten Schlüssels (CCK$_{S2}$) durch die Basisstation (BS),
    * einen Vergleich (C) der entschlüsselten Adresse (ADD) mit den Adressen der zwei Gruppen von Terminals zum Erhalt eines Verschlüsselungsschlüssels der Daten durch die Basisstation (BS),

    * eine Entschlüsselung der Daten mithilfe des Verschlüsselungsschlüssels der Daten durch die Basisstation (BS).

14. Datenverschlüsselungsverfahren von einer Basisstation (BS) aus zu einem Terminal (TB2), umfassend die Stufe des Ausgabeverfahrens gemäß Anspruch 1 bis 11, **dadurch gekennzeichnet, dass** es, wenn das Terminal (TB2) zur zweiten Gruppe (ENS$^B$) gehört, umfasst:

    * eine Verschlüsselung einer Adresse (ADD) des Terminals (TB2) mithilfe des zweiten Schlüssels (CCK$_{S2}$) durch die Basisstation (BS),
    * eine Verschlüsselung der Daten (DATA) mithilfe eines dritten Verschlüsselungsschlüssels der Daten durch die Basisstation,
    * eine Übertragung der verschlüsselten Adresse (E1(ADD)) und der verschlüsselten Daten (E2(DATA)) auf das Terminal (TB2).

15. Datenverschlüsselungsverfahren durch ein Terminal (TB2) bei einer Datenübertragung von einer Basisstation (BS) zu dem genannten Terminal (TB2), umfassend die Stufe des Ausgabeverfahrens gemäß Anspruch 1 bis 11, **dadurch gekennzeichnet, dass** es, wenn das Terminal (TB2) zur zweiten Gruppe (ENS$^B$) gehört, umfasst:

    * eine Entschlüsselung der Adresse (ADD) des Terminals (TB2) mithilfe des zweiten Schlüssels (CCK$_{S2}$) durch das Terminal,
    * einen Vergleich (D) der entschlüsselten Adresse mit den Adressen des Terminals, um den Verschlüsselungsschlüssel der Daten durch das Terminal zu erhalten,
    * eine Entschlüsselung der Daten mithilfe des Verschlüsselungsschlüssels der Daten durch das Terminal.

16. Verschlüsselungs- und Entschlüsselungsverfahren gemäß Anspruch 12 bis 15, **dadurch gekennzeichnet, dass** der dritte Datenverschlüsselungsschlüssel ein erster gemeinsamer Schlüssel (CCK$_B$) mit der ersten Gruppe von Terminals ist.

17. Verschlüsselungs- und Entschlüsselungsverfahren gemäß Anspruch 12 bis 15, **dadurch gekennzeichnet, dass** der dritte Datenverschlüsselungsschlüssel ein individueller Verschlüsselungsschlüssel (DCK$_B$) des Terminals ist.

18. Mobiles Terminal für die Datenübertragung innerhalb eines Kommunikationsnetzes, wobei das Terminal eine Adresse umfasst, **dadurch gekennzeichnet, dass** es wenigstens einen Rechner umfasst, der die Realisierung erlaubt:

\* einer Instantiierungsfunktion, die es ermöglicht, sich bei einem Verwaltungsserver der Verschlüsselungsschlüssel (SERV) anzumelden;

\* einer Empfangs- und Entschlüsselungsfunktion eines ersten gemeinsamen Verschlüsselungsschlüssels ($CCK_{B1}$), der erhalten wird, nachdem das Terminal sich bei dem genannten Server (SERV) angemeldet hat;

\* einer Registrierungsfunktion des ersten gemeinsamen Schlüssels ($CCK_{B1}$), der in einem Speicher (M) empfangen wird;

\* einer Generierungsfunktion eines zweiten Schlüssels ($CCK_{S2}$), dessen Größe strikt kleiner ist als die Größe des ersten Schlüssels ($CCK_{B1}$);

\* einer ersten Verschlüsselungsfunktion seiner Adresse (ADD) zum Senden und Entschlüsselungsfunktion einer Adresse zum Empfang ab dem zweiten Verschlüsselungsschlüssel ($CCK_{S2}$) ;

\* einer zweiten Verschlüsselungsfunktion der vom Terminal ausgegebenen Daten und Entschlüsselungsfunktion der von einem dritten Datenverschlüsselungsschlüssel ($CCK_B$, $DCK_B$) empfangenen Daten.

19. Datenserver für die Verwaltung und die Ausgabe von Verschlüsselungsschlüsseln zu Terminals eines Kommunikationsnetzwerks, **dadurch gekennzeichnet, dass** es wenigstens einen Rechner umfasst, der die Umsetzung des Ausgabeverfahrens gemäß Anspruch 1 bis 11 umsetzt.

20. System, umfassend einen Server, der zur Ausführung des Ausgabeverfahrens gemäß Anspruch 1 bis 11 angepasst ist, und eine Basisstation für die Datenübertragung innerhalb eines Kommunikationsnetzes zu einem Terminal, das einen Verschlüsselungsschlüssel gemäß dem Ausgabeverfahren gemäß Anspruch 1 bis 11 empfangen hat, **dadurch gekennzeichnet, dass** sie wenigstens einen Rechner umfasst, der die Realisierung zulässt:

\* einer ersten Verschlüsselungsfunktion einer Adresse (ADD) des Terminals zum Senden und einer Entschlüsselungsfunktion einer Adresse des Terminals zum Empfangen ab dem zweiten Verschlüsselungsschlüssel ($CCK_{S2}$) ;

\* einer zweiten Verschlüsselungsfunktion der zum Terminal gesendeten Daten und Entschlüsselungsfunktion der vom Terminal empfangenen Daten ab einem dritten Datenverschlüsselungsschlüssel ($CK_B$, $DCK_B$).

## Claims

1. Method of distributing encryption keys to two sets ($ENS^B$, $ENS^S$) of terminals (TBi, TSi) through a communication network from a data server (SERV), a first set ($ENS^S$) of terminals (TSi) using a first type of key ($CCK_S$) with a given size (N), a second set ($ENS^B$) of terminals (TBi) using a second type of key ($CCK_B$) larger than the given size (Nsup), the keys of each of the types being known by the server (SERV) at a given instant, each terminal (TBi, TSi) comprising an identification address (ADDi), the method comprising the following in the server:

• reception of a first data message from a first terminal, the first message containing the address of the first terminal;
• identification of said first terminal (T1) by a comparison of the address (ADDi) of the terminal (T1) with addresses of the two sets of terminals to determine to which of the two sets the first terminal belongs;
• selection of a first key of the second type of key ($CCK_B$);
• when the first terminal (T1) belongs to the first set ($ENS_S$), processing of the first key ($CCK_{B1}$) by the server (SERV) using a first function (F1) to define a second key ($CCK_{S2}$) with size N and compatible with keys of the first type ($CCK_S$);
• transmission of the first key ($CCK_{B1}$) or the second key ($CCK_{S2}$) depending on whether the first terminal belongs to the first or the second set, to the first terminal (T1).

2. Method of distributing encryption keys according to claim 1, **characterised in that** it comprises a reception of the key transmitted by the first terminal (T1).

3. Method of distributing encryption keys according to any one of claims 1 to 2, **characterised in that** the keys of the first type and the keys of the second type are common to all terminals.

4. Method of distributing encryption keys according to any one of claims 1 to 3, **characterised in that** the addresses are individual defining a unique identifier for each terminal.

5. Method of distributing encryption keys according to any one of claims 1 to 3, **characterised in that** the addresses are collective defining identifiers for groups of at least two terminals.

6. Method of distributing encryption keys according to any one of claims 1 to 5, **characterised in that** when the first terminal (T1) belongs to the second set ($ENS^B$), the method includes processing of the first key ($CCK_{B1}$) by the first terminal (T1) using a first function (F1) in order to define a second key ($CCK_{S2}$) with a size equal to N and compatible with keys of the first type ($CCK_S$).

7. Method of distributing encryption keys according to any one of claims 1 to 6, **characterised in that** the first function (F1) is a so-called single-directional function.

8. Method of distributing encryption keys according to any one of claims 1 to 7, **characterised in that** the first function (F1) is a hash function.

9. Method of distributing encryption keys according to any one of claims 1 to 8, **characterised in that** the size of keys of the second type ($CCK_{B1}$) is larger than 100 bits.

10. Method of distributing encryption keys according to any one of claims 1 to 9, **characterised in that** data exchanges between the server (SERV) and at least one terminal are made using a base station to set up the connection and for routing transmitted data.

11. Method of distributing encryption keys according to any one of claims 1 to 10, **characterised in that** the communication network is a PMR "Professional Mobile Radiocommunications" type of network of the TETRA (Trans European Trunked Radio) type.

12. Method of data encryption during a data transfer from a terminal (TB1) including steps in the distribution method according to any one claims 1 to 11, **characterised in that** when the terminal (TB1) belongs to the second set ($ENS^B$), the method comprises,

   • encryption by the terminal of an address (ADD) of the terminal (TB1) using the second key ($CCK_{S2}$),
   • encryption by the terminal of data (DATA) using a third data encryption key ($CCK_B$, $DCK_B$),
   • transmission of the encrypted address (E1(ADD)) and encrypted data (E2(DATA)) to a base station (BS).

13. Method of data decryption during a data transfer from a terminal (TB1) to a base station (BS), including steps in the distribution method according to any one of claims 1 to 11, **characterised in that** when the terminal (TB1) belongs to the second set ($ENS^B$), the method comprises:

   • decryption of the address (ADD) of the terminal (TB1) by the base station (BS) using the second key ($CCK_{S2}$),
   • comparison (C) by the base station (BS) of the decrypted address (ADD) with the addresses of the two sets of terminals to obtain a data encryption key,
   • decryption of the data by the base station (BS) using the data encryption key.

14. Method of data encryption from a base station (BS) to a terminal (TB2) including steps in the distribution method according to any one of claims 1 to 11, **characterised in that** when the terminal (TB2) belongs to the second set ($ENS^B$), the method comprises:

   • encryption of an address (ADD) of the terminal (TB2) by the base station (BS) using the second key ($CCK_{S2}$),
   • encryption of data (DATA) by the base station (BS) using a third data encryption key,
   • transmission of the encrypted address (E1(ADD)) and encrypted data (E2(DATA)) to the terminal (TB2).

15. Method of data decryption by a terminal (TB2) during a data transfer from a base station (BS) to said terminal (TB2), including steps in the distribution method according to any one of claims 1 to 11, **characterised in that** when the terminal (TB2) belongs to the second set ($ENS^B$) the method comprises,

   • decryption of the address (ADD) of the terminal (TB2) by the terminal using the second key ($CCK_{S2}$),
   • comparison (D) of the decrypted address with the addresses of the terminal to obtain the data encryption key by the terminal,
   • decryption of the data by the terminal using the data encryption key.

16. Encryption and decryption method according to any one of claims 12 to 15, **characterised in that** the third data encryption key is a first key ($CCK_B$) common to the first set of terminals.

17. Encryption and decryption method according to any one of claims 12 to 15, **characterised in that** the third data encryption key is an individual encryption key ($DCK_B$) of the terminal.

18. Mobile terminal for data transmission within a communication network, the terminal comprising an address, **characterised in that** it comprises at least one computer capable of performing:

   • an instantiation function to declare itself to an encryption key management server (SERV);
   • a reception and decryption function of a first common encryption key ($CCK_{B1}$) received after the terminal has declared itself to said server (SERV);
   • a save function of the first common key ($CCK_{B1}$) received in a memory (M);
   • a function to generate a second key ($CCK_{S2}$), the size of which is less than the size of the first key ($CCK_{B1}$);
   • a first function to encrypt its address (ADD) in emission and to decrypt an address in reception using the second encryption key ($CCK_{S2}$);
• a second function to encrypt data emitted by the terminal and to decrypt received data using a third data encryption key ($CCK_B$, $DCK_B$).

19. Data server for management and distribution of encryption keys to terminals in a communication network, **characterised in that** it comprises at least one computer capable of implementing the distribution method according to any one of claims 1 to 11.

20. System comprising a server adapted to implement the distribution method according to any one of claims 1 to 11, and a base station to transfer data within a communication network to a terminal that has received an encryption key according to the distribution method claimed in any one of claims 1 to 11, **characterised in that** it comprises at least one computer in order to perform:

• a first function for encrypting an address (ADD) of the terminal in emission and for decrypting an address of the terminal in reception, starting from the second encryption key ($CCK_{S2}$);
• a second function for encrypting data sent to the terminal and for decrypting data received from the terminal, using a third data encryption key ($CCK_B$, $DCK_B$).

FIG. 1

FIG. 2

FIG. 3

FIG. 4

FIG. 5

## RÉFÉRENCES CITÉES DANS LA DESCRIPTION

**Littérature non-brevet citée dans la description**

- **I. RAY et al.** Using Compatible Keys for Secure Multicasting in E-Commerce. *Proceedings of the International Parallel and Distributed Processing Symposium (IPDPS'02)*

- **M. BAUGHER et al.** Multicast Security (MSEC) Group Key Management Architecture. *Request for Comments 4046, Network Working Group*